# EUROPÄISCHE PATENTANMELDUNG

(11) **EP 1 461 987 A1**
(43) Veröffentlichungstag der Anmeldung: **29.09.2004**
(21) Anmeldenummer: 04006642.5
(22) Anmeldetag: 19.03.2004
(51) Int. Cl.: A01B 61/04

(54) **Überlastsicherheitseinrichtung für Bodenbearbeitungsgeräte**

(30) Priorität: 25.03.2003 DE 10313179
(71) Anmelder: Amazonen-Werke H. Dreyer GmbH & Co. KG, 49205 Hasbergen (DE)
(72) Erfinder: Scheufler, Bernd, Dr., 49205 Hasbergen (DE)

(57) **Zusammenfassung**

Überlastsicherheitseinrichtung für Bodenbearbeitungsgeräte mit einem das Bodenbearbeitungswerkzeug mit dem Traggestell verbindenden Gelenk, das aus zwei durch Federbelastung zusammengehaltenen und sich gegenseitig abstützenden Gelenkteilen besteht, von denen das eine am Bodenbearbeitungswerkzeug und das andere am Traggestell befestigt sind, wobei an beiden Gelenkteilen vier als Abstützelemente (12,12',12'') dienende Kugeln und Pfannen im radialen Abstand von der Gelenkmitte und in Umfangsrichtung verteilt angeordnet sind. Um ein schnelles Ausweichen des Bodenbearbeitungswerkzeuges beim Auftreffen im Boden festsitzenden Hindernissen sich seitlich, wie nach oben zu erreichen ist vorgesehen, dass die oberen Abstützelemente (12') in einem engeren Abstand als die unteren Abstützelemente (12'') zueinander angeordnet sind.

## Beschreibung

Die Erfindung betrifft eine Überlastsicherheitseinrichtung für Bodenbearbeitungsgeräte gemäß des Oberbegriffes des Patentanspruches 1.

Eine derartige Überlastsicherungseinrichtung ist beispielsweise in der DE 22 26 449 B2 beschrieben. Diese Überlastsicherungseinrichtung weist vier Abstützelemente auf, wobei die oberen und unteren Abstützelemente im gleichen Abstand zueinander angeordnet sind. Wenn das Bodenbearbeitungswerkzeug auf im Boden sitzenden Hindernissen auftrifft, kann es gegen eine Federkraft nach oben ausweichen. Problematisch ist es jedoch, wenn das Bodenbearbeitungswerkzeug nicht frontal, sondern seitlich oder leicht seitlich auf ein im Boden festsitzendes Hindernis auftrifft. Hierbei treten große Kräfte in dem Gelenk und den übrigen Teilen des Bodenbearbeitungsgerätes auf, weil das Bodenbearbeitungswerkzeug noch oben oder seitlich schwenken kann.

Eine derartige bekannte Überlastsicherungseinrichtung ist beim Einsatz von Pflügen, insbesondere Drehpflügen durchaus vorteilhaft, sie lässt sich jedoch nicht bei mit hohen Geschwindigkeit über das Feld gezogene anderen Bodenbearbeitungsgeräten, wie beispielsweise Grubbern einsetzen.

Der Erfindung liegt die Aufgabe zugrunde, ein schnelles Ausweichen des Bodenbearbeitungswerkzeuges beim Auftreffen im Boden festsitzenden Hindernissen sowohl seitlich, wie nach oben zu erreichen.

Diese Aufgabe wird in einer ersten Lösung erfindungsgemäß dadurch gelöst, dass die oberen Abstützelemente in einem engeren Abstand als die unteren Abstützelemente zueinander angeordnet sind. Infolge dieser Maßnahme wird erreicht dass bei einem seitlichen Auftreffen des Bodenbearbeitungswerkzeugen auf den Boden festsitzenden Hindernissen das Bodenbearbeitungswerkzeug nicht nur seitlich, sondern aufgrund der sich ergebenden schrägen Schwenkachse durch die Anordnung der Abstützelemente zueinander sowohl seitlich wie auch noch oben ausweicht. Hierdurch weicht das Bodenbearbeitungswerkzeug vorteilhaft aus.

In vorteilhafter Weise sind die Abstützelemente derart angeordnet, dass die umlaufenden Verbindungsgeraden der Mittelpunkt der Abstützelemente miteinander eine trapezförmige Gestalt bilden.

In einer weiteren Lösung der Erfindung ist vorgesehen, dass nur ein oberes Abstützelement und zwei untere beabstandet Abstandelemente vorgesehen sind.

Bei diesen Lösungen wird grundsätzlich ein kombiniertes Ausweichen zur Seite und nach oben erreicht.

Eine besonders vorteilhafte Ausgestaltung der Abstützelemente wird dadurch erreicht, dass die Kugel(n) des(r) oberen Abstützelemente(s) am Rahmenteil und die Pfannen am Werkzeugteil und die Kugeln der unteren Abstützelemente am Werkzeugteil und die Pfannen am Rahmenteil angeordnet sind. Infolge dieser Maßnahmen ergibt sich eine kompakt bauende, vorteilhafte Ausgestaltung des Gelenkes.

Weitere Einzelheiten der Erfindung sind den übrigen Unteransprüchen, der Beispielsbeschreibung und den Zeichnungen zu entnehmen. Hierbei zeigen
- Fig. 1: das als Grubber ausgebildete Bodenbearbeitungsgerät mit den die erfindungsgemäße Steinsicherung aufweisenden Bodenbearbeitungselementen,
- Fig. 2: das Bodenbearbeitungselement in Arbeitsstellung in perspektivischer Ansicht,
- Fig. 3: das Bodenbearbeitungselement in Arbeitsstellung Schnitt,
- Fig. 4: die an den Querträger angeordnete Gelenkseite in perspektivischer Darstellung,
- Fig. 5: die Gelenkseite gemäß Fig. 4 in der Ansicht von hinten,
- Fig. 6: die Gelenkseite, die an dem Bodenbearbeitungswerkzeug angebracht ist in der Ansicht von vorne,
- Fig. 7: die an dem Bodenbearbeitungswerkzeug angebrachte Gelenkseite gemäß Fig. 6 in perspektivischer Darstellung,
- Fig. 8: das seitliche Ausweichen des Bodenbearbeitungswerkzeuges beim Auftreffen auf im Boden festsitzende Hindernisse, um die seitliche schräge Achse in perspektivischer Darstellung,
- Fig. 9: ein weiteres Bodenbearbeitungswerkzeug im Schnitt mit einer dreieckförmigen Anordnung der Abstandselemente,
- Fig. 10: das Bodenbearbeitungswerkzeug gemäß Fig. 9 in perspektivischer Darstellung und Ausweichstellung,
- Fig. 11: das Bodenbearbeitungswerkzeug in Seitenansicht entsprechend Fig. 10 und
- Fig. 12: das Bodenbearbeitungswerkzeug entsprechend Fig. 11 im Schnitt

Das Bodenbearbeitungsgerät 1 ist als Grubber ausgebildet weist den als Traggestell ausgebildeten Grundrahmen 2 mit den parallel zueinander angeordneten Querträger 3 auf. Auf der Vorderseite des Rahmens 2 ist der Dreipunktanbaubock 4 angeordnet, während auf der Rückseite die Bodenbearbeitungswerkzeuge 5 oder -elemente, des Bodenbearbeitungsgerätes 1 in der Tiefe führende Bodenwalze 6 angeordnet ist. An den Querträgern 3 sind mittels Befestigungselemente 7 die die Steinsicherung 8 aufweisende Bodenbearbeitungswerkzeuge 5 angeordnet. Jedes Bodenbearbeitungswerkzeug 5 ist mit dem Traggestell 2 über ein Gelenk 9 verbunden, das aus zwei durch Federbelastung zusammengehaltene und sich gegenseitig abstützende Gelenkteile 10 und 11 besteht. Eines dieser Gelenkteile 10 ist am Bodenbearbeitungswerkzeug 5 und das andere Gelenkteil 11 am Querträger 3 des Traggestelles 2 befestigt. An beiden Gelenkteilen 10 und 11 sind als Abstützelemente 12 dienende Kugeln 13 und Pfannen 14 im radialen Abstand von der Gelenkmitte 15 und in Umfangsrichtung verteilt angeordnet. Im Ausführungsbeispiel sind die Kugeln 13 dem Gelenkteil 11, welche dem Traggestell 2 zugeordnet angeordnet ist, während die Pfannen an dem Gelenkteil 10, welches dem Bodenbearbeitungswerkzeug 5 zugeordnet ist, angeordnet sind.

Das Bodenbearbeitungswerkzeug 5 weist das Bearbeitungsteil 16, des an einem nach oben ragenden Halter 17 befestigt ist, auf. Dieser Halter 17 ist an einem Zwischenstück 18 befestigt, welches im oberen Bereich eine rohrförmige Hülse 19 aufweist. In dieser rohrförmigen Hülse 19 ist das Federelement 20 angeordnet. Auf der Rückseite des Federelementes 20, welches als Druckfeder ausgebildet ist, greift über ein Abstützelement 21 das als Seil 22 ausgebildete biegsame Zugelement 23 an. Auf seiner Vorderseite ist das Seil 22 über eine Einstellschraube 24 über den Quersteg 24 mit dem vorderen Halter 25 des an dem Traggestell 2 angeordneten Gelenkteiles 11 verbunden. Die Druckfeder 20 liegt an dem Gelenkteil 10 an. Auf der Rückseite der Hülse 19 ist an dieser ein Abdeckelement 27 befestigt, um zu verhindern, falls das Zugelement 23 reist das Teile aufgrund der plötzlichen Entspannung der Feder 20 weggeschleudert werden kann.

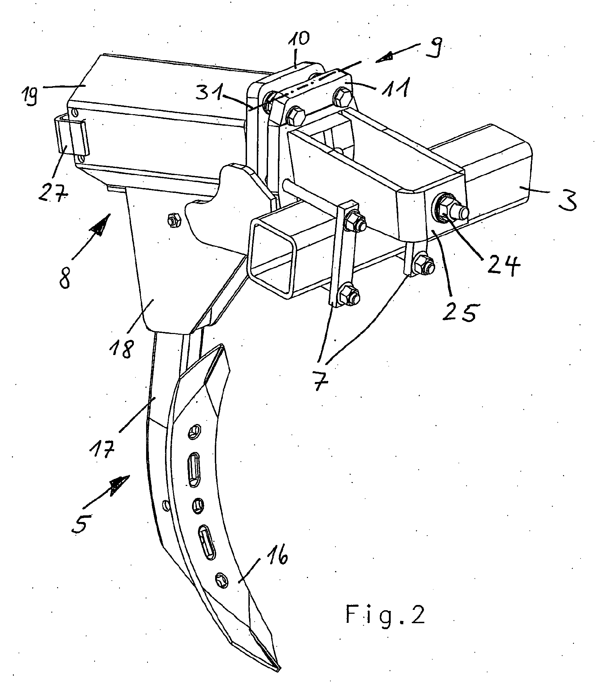

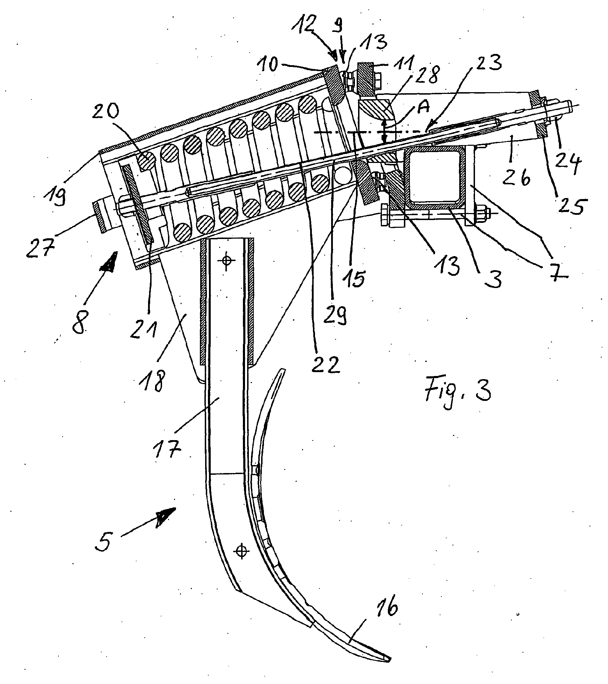

Oberhalb des gespannten Zugelementes 23 ist ein Anlageelement 28 an dem Gelenkteil 11, welches dem Traggestell 2 zugeordnet ist, für das Zugelement 23 angeordnet. In Arbeitsposition des Bodenbearbeitungselementes 5, wie in den Fig. 2 bis 3 dargestellt befindet sich das Anlageelement 28 im Abstand A zu dem Zugelement 23. Das Anlageelement 28 ist an dem Gelenkteil 11 befestigt, an dem das Zugelement 23 und nicht das Federelement 20 befestigt ist. Die Zugrichtungsgerade 29 der aus Feder 20 und Zugelement 23 bestehenden Federbelastungseinrichtung 30 verläuft unterhalb der Mittelebene der Gelenkteile 10 und 11. Dies bedeutet, das die Angriffslinie der Federbelastungseinrichtung 20 unterhalb der Mittelebene der Gelenkteile 10 und 11 verläuft. Hierdurch wird ein größerer wirksamer Hebelarm für die Federbelasteinrichtung 20 vor allem in der Arbeitsposition erreicht.

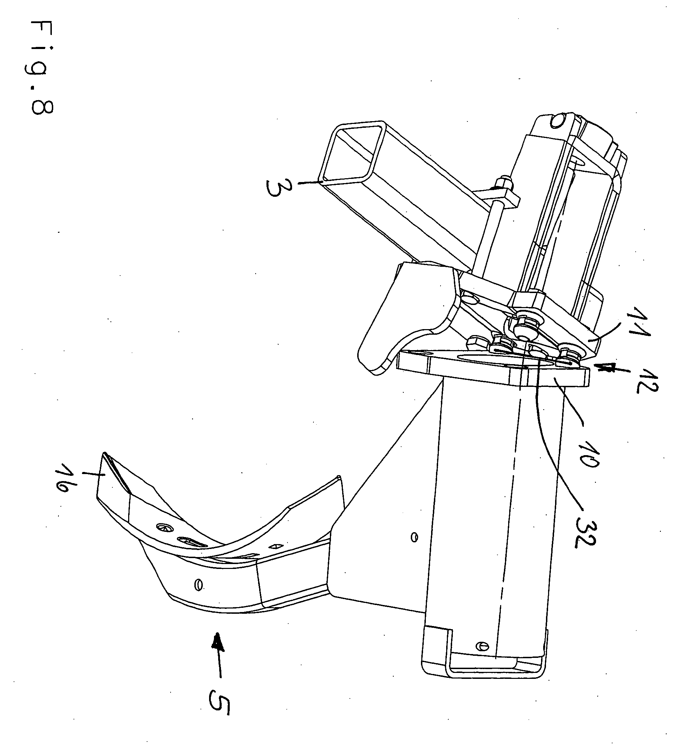

Die oberen Abstützelemente 12' sind in einem engeren Abstand als die unteren Abstützelemente 12'' angeordnet. Dadurch bilden die Verbindungsgeraden 31,32,33,34,35 der Abstützelemente 12' und 12" die Umgangslinie, die um den Mittelpunkte der Abstützelemente 12' und 12'', die aus den Kugeln 13 bzw. Pfannen 14 bestehen, gezogen sind, die trapezförmige Gestalt. Die obere Verbindungsgerade 31 bilden die Verbindungsgeraden 31, der Abstützelemente 12' und 12'' die Schwenkachse zum Ausweichen des Bodenbearbeitungswerkzeuges 5, wenn die Spitze 16 des Bodenbearbeitungswerkzeuges 5 frontal auf einem im Boden festsitzenden Hindernis trifft. Sollte das Bodenbearbeitungswerkzeug 16 seitlich auf einem im Boden festsitzenden Hindernis treffen, wird es je nach dem welche Seite auf das Hindernis trifft, entweder um die schräge Gerade 32 oder die andere schräge Gerade 33 nach außen ausweichen, wie beispielhaft in Fig. 8 dargestellt ist.

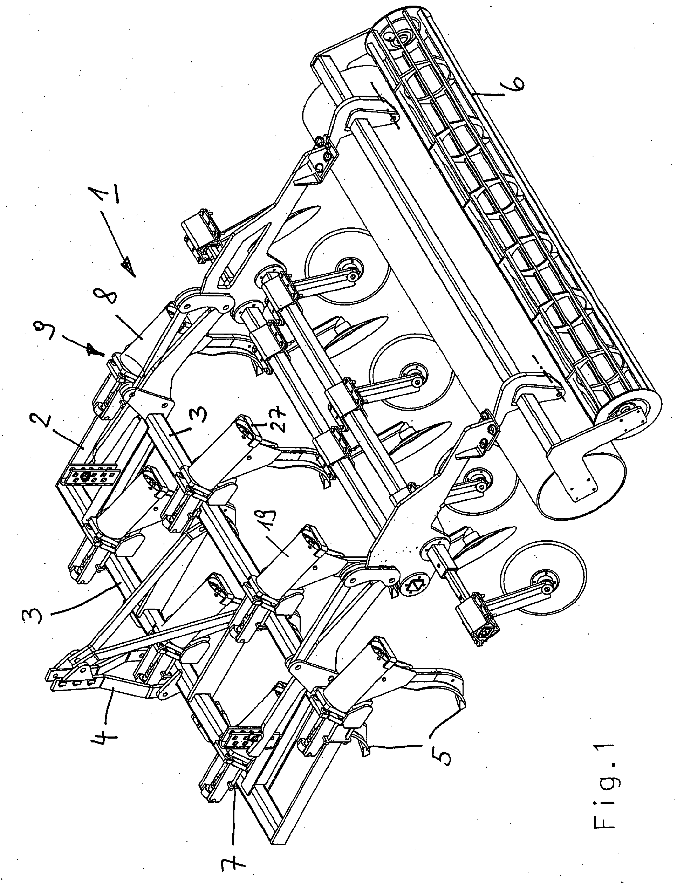

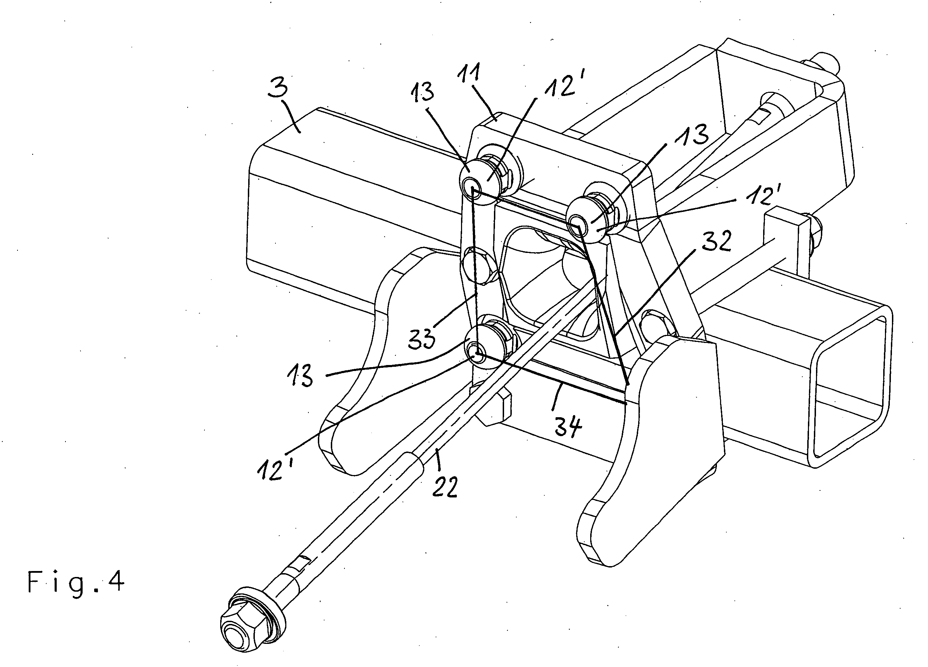

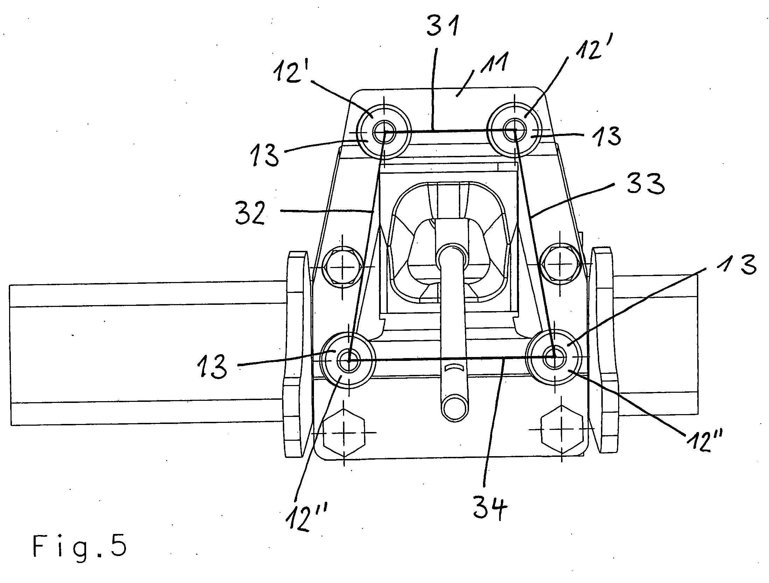

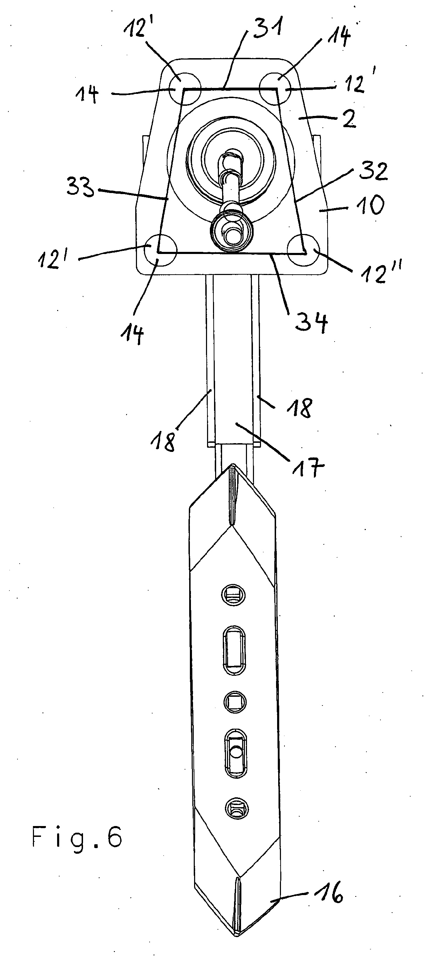

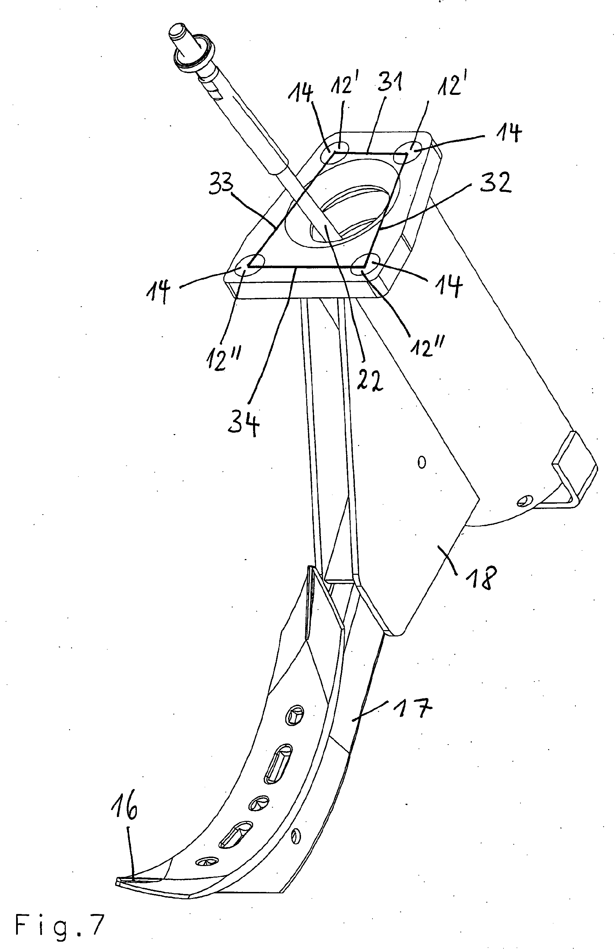

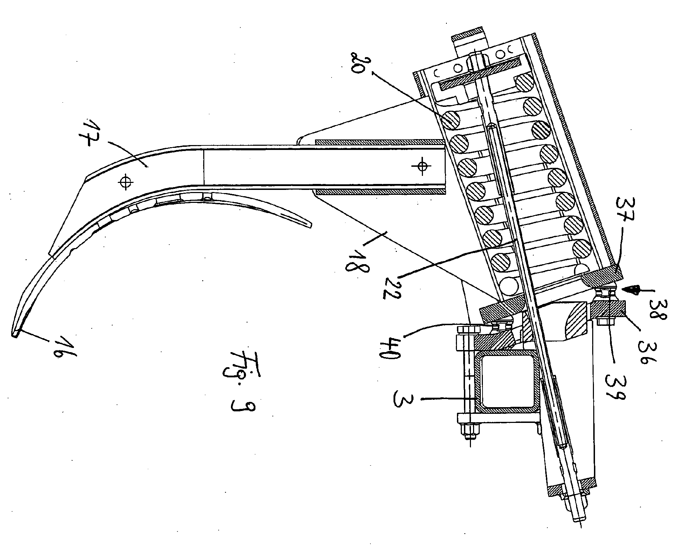

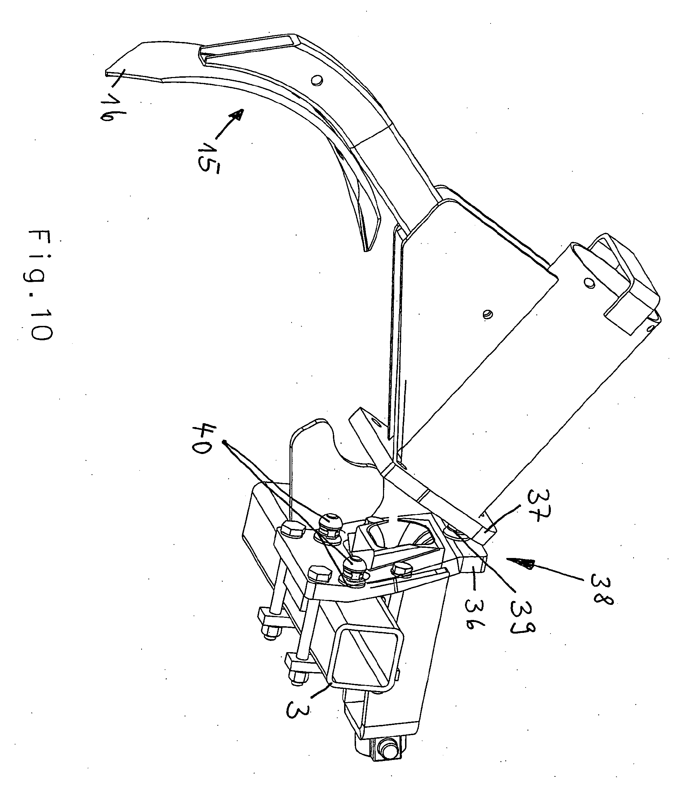

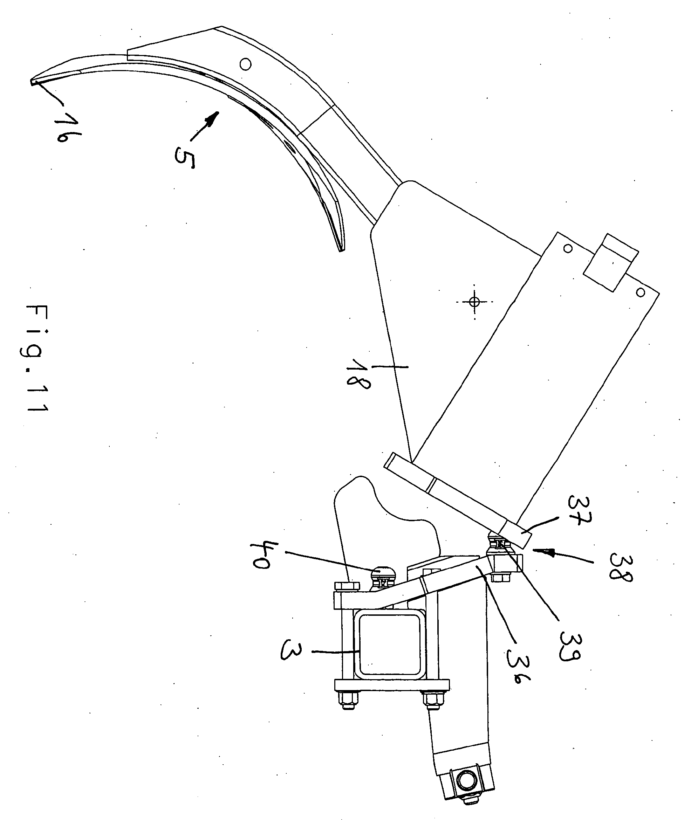

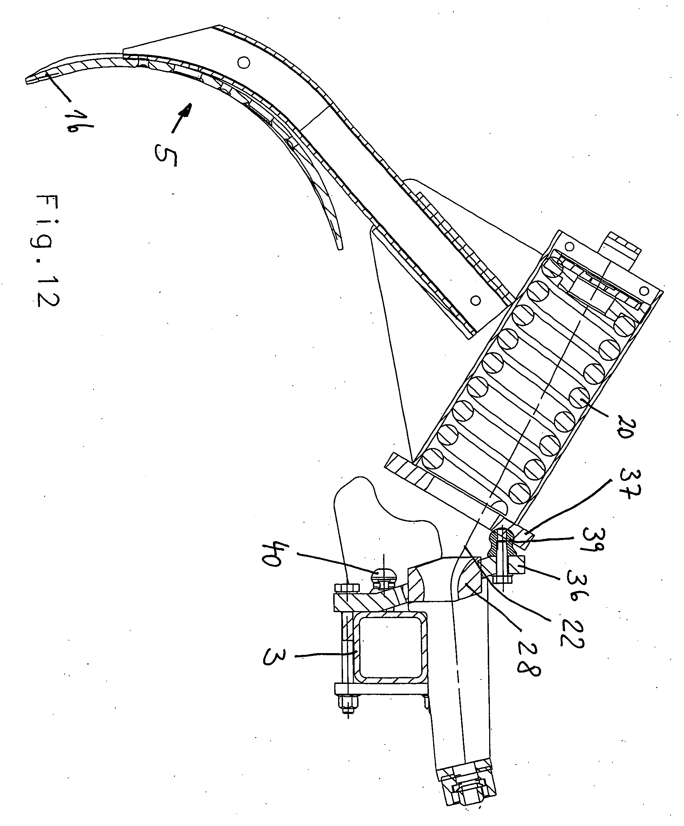

Die Ausgestaltung gemäß den Fig. 9 bis 12 unterscheidet sich von der Ausgestaltung gemäß dem Ausführungsbeispiel nach den Fig. 1 bis 8 dadurch, dass die Gelenkteile 36 und 37 des Gelenkes 38 ein oberes Abstützelement 39 und zwei untere Abstützelemente 40 aufweisen, die ebenfalls als Kugeln 13 und Pfannen 14 ausgebildet sind.

Die unteren beiden Abstützelemente 40 sind im Abstand zueinander angeordnet, so dass sich eine dreiförmige Anordnung ergibt.

## Patentansprüche

1. Überlastsicherheitseinrichtung für Bodenbearbeitungsgeräte mit einem das Bodenbearbeitungswerkzeug mit dem Traggestell verbindenden Gelenk, das aus zwei durch Federbelastung zusammengehaltenen und sich gegenseitig abstützenden Gelenkteilen besteht, von denen das eine am Bodenbearbeitungswerkzeug und das andere am Traggestell befestigt sind, wobei an beiden Gelenkteilen vier als Abstützelemente dienende Kugeln und Pfannen im radialen Abstand von der Gelenkmitte und in Umfangsrichtung verteilt angeordnet sind, **dadurch gekennzeichnet, dass** die oberen Abstützelemente (12') in einem engeren Abstand als die unteren Abstützelemente (12'') zueinander angeordnet sind.

2. Überlastsicherheitseinrichtung nach Anspruch 1, **dadurch gekennzeichnet, dass** die umlaufenden Verbindungsgeraden (31,32,33,34) der Mittelpunkte der Abstützelemente (12' ,12" ) miteinander eine trapezförmige Gestalt bilden.

3. Überlastsicherheitseinrichtung für Bodenbearbeitungsgeräte mit einem das Bodenbearbeitungswerkzeug mit dem Traggestell verbindenden Gelenk, das aus zwei durch Federbelastung zusammengehaltenen und sich gegenseitig abstützenden Gelenkteilen besteht, von denen das eine am Bodenbearbeitungswerkzeug und das andere am Traggestell befestigt sind, wobei an beiden Gelenkteilen drei als Abstützelemente dienende Kugeln und Pfannen im radialen Abstand von der Gelenkmitte und in Umfangsrichtung verteilt angeordnet sind, **dadurch gekennzeichnet**, das nur ein oberes Abstützelement (39) und zwei untere voneinander beabstandet angeordnete Abstandselemente (40) vorgesehen sind.

4. Überlastsicherheitseinrichtung nach Anspruch 1 oder 3, **dadurch gekennzeichnet, dass** die Kugel(n) des(r) oberen Abstützelemente(s) am Rahmenteil und die Pfannen am Werkzeugteil und die Kugeln der unteren Abstützelemente am Werkzeugteil und die Pfannen am Rahmenteil angeordnet sind.
